# EUROPEAN PATENT APPLICATION

(11) **EP 4 654 733 A1**
(43) Date of publication of application: **26.11.2025**
(21) Application number: 23928089.4
(22) Date of filing: 23.03.2023
(51) Int. Cl.: H04W 76/10

(54) **USER PLANE PATH MANAGEMENT METHOD, APPARATUS AND SYSTEM**

(71) Applicant: Huawei Technologies Co., Ltd., Shenzhen, Guangdong 518129 (CN)
(72) Inventor: YAO, Qi, Shenzhen, Guangdong 518129 (CN); WU, Shaoyun, Shenzhen, Guangdong 518129 (CN); XING, Weijun, Shenzhen, Guangdong 518129 (CN)
(74) Representative: Körber, Martin Hans
(86) International application number: PCT/CN2023/083511
(87) International publication number: WO 2024/192777

(57) **Abstract**

This application provides a user plane path management method, an apparatus, and a system, and is applied to the field of communication technologies. The user plane path management method provided in this application includes: A control network element receives a first message, where the first message indicates to establish a user plane path; the control network element determines a plurality of user plane path nodes based on the first message, where the user plane path node is a user plane function network element or an access network device; and the control network element establishes a user plane path between the plurality of user plane path nodes. According to the solutions, there is no limitation to an existing fixed user plane path anymore, but the control network element is introduced. The control network element flexibly selects user plane path nodes, and flexibly establishes a user plane path between the user plane path nodes. This is applicable to a demand of a future new service for a user plane path.

## Description

### TECHNICAL FIELD

This application relates to the field of communication technologies, and in particular, to a user plane path management method, an apparatus, and a system.

### BACKGROUND

In a 5th generation mobile communication technology (5th generation mobile communication technology, 5G) network, when establishing a protocol data unit (protocol data unit, PDU) session (PDU session) for a terminal device, the 5G network establishes a user plane path corresponding to the PDU session.

Currently, a process of establishing the user plane path mainly includes: A terminal device sends a session establishment request message, where a data network name (data network name, DNN) is carried in the session establishment request message, and the session establishment request message reaches a session management function (session management function, SMF) network element through a radio access network (radio access network, RAN) device and an access and mobility management function (access and mobility management function, AMF) network element that are accessed by the terminal device. The SMF network element selects a user plane function (user plane function, UPF) network element as an anchor of a PDU session based on information such as the DNN and a network topology. The UPF network element and the RAN respectively allocate tunnel information of the UPF network element and the RAN, and exchange the tunnel information through the SMF network element, to establish an uplink transmission channel and a downlink transmission channel, so as to complete establishment of the user plane path.

However, an existing user plane path establishment mechanism is applicable only to a scenario in which a terminal device accesses a data service of a data network (data network, DN), and a user plane path is fixed, that is, terminal device-RAN-UPF-DN. In a future network, a new service may not be limited to the terminal device accessing the DN. Therefore, the existing user plane path establishment mechanism may not meet a requirement of the new service for the user plane path.

### SUMMARY

Embodiments of this application provide a user plane path management method, an apparatus, and a system, to meet a requirement of a future network for a user plane path.

To achieve the foregoing objective, the following technical solutions are used in embodiments of this application.

According to a first aspect, a user plane path management method is provided. The method may be performed by a control network element. The control network element may be a functional entity different from an existing network element, or may be integrated into a session management network element or another existing network element. The method includes: The control network element receives a first message, where the first message indicates to establish a user plane path; the control network element establishes a plurality of user plane path nodes based on the first message, where the user plane path node is a user plane function network element or an access network device; and the control network element establishes a user plane path between the plurality of user plane path nodes.

According to the user plane path management method provided in embodiments of this application, there is no limitation to an existing user plane path of terminal device-RAN-UPF-DN anymore, but a control network element is introduced. The control network element flexibly selects user plane path nodes, and flexibly establishes a user plane path between access network devices, between an access network device and a user plane function network element, or between user plane function network elements. This is applicable to a demand of a future new service for a user plane path.

With reference to the first aspect, in a possible design, the first message indicates to establish a user plane path corresponding to a first service function chain, and the first message includes information indicating a plurality of service functions included in the first service function chain. That the control network element establishes the plurality of user plane path nodes based on the first message includes: The control network element establishes, based on the first message, a plurality of user plane path nodes corresponding to the plurality of service functions included in the first service function chain.

According to this solution, the control network element may determine the corresponding user plane path nodes based on the service functions, to reduce a detour in the user plane path.

With reference to the first aspect, in a possible design, the first message indicates to establish a user plane path corresponding to a first sensing service, and the first message includes parameter information related to the first sensing service (sensing service). That the control network element determines the plurality of user plane path nodes based on the first message includes: The control network element determines the plurality of user plane path nodes based on the parameter information related to the first sensing service.

According to this solution, the control network element may select appropriate user plane path nodes based on the parameter information related to the sensing service. For example, if the first message includes sensing accuracy information corresponding to the first sensing service, the control network element may determine an appropriate quantity of user plane path nodes based on sensing accuracy. If an accuracy requirement is high, a large quantity of user plane path nodes may be selected; or if an accuracy requirement is low, a small quantity of user plane path nodes may be selected, to avoid resource waste.

With reference to the first aspect, in a possible design, the parameter information related to the first sensing service may include at least one of the following: location information, sensing accuracy information, validity period information, service type information, maximum sensing distance information, or maximum sensing velocity information corresponding to the first sensing service.

With reference to the first aspect, in a possible design, the user plane path between the plurality of user plane path nodes is a general packet radio service (general packet radio service, GPRS) tunnelling protocol (GPRS tunneling protocol for the user plane, GTP-U) tunnel path or a segment routing over internet protocol version 6 (internet protocol version 6, IPv6) (segment routing over IPv6, SRv6) path.

With reference to the first aspect, in a possible design, when the user plane path between the plurality of user plane path nodes is a GTP-U tunnel path, that the control network element establishes the user plane path between the plurality of user plane path nodes includes: The control network element sends a second request message to a first user plane path node, where the second request message indicates to establish a first GTP-U tunnel path, and the first user plane path node is any user plane path node in the plurality of user plane path nodes; the control network element receives a second response message from the first user plane path node, where the second response message includes GTP-U tunnel path information allocated by the first user plane path node to the first GTP-U tunnel path; the control network element sends a third request message to a second user plane path node, where the third request message is used for requesting to establish the first GTP-U tunnel path, the third request message includes the GTP-U tunnel path information allocated by the first user plane path node to the first GTP-U tunnel path, and the second user plane path node is a user plane path node in the plurality of user plane path nodes that is different from the first user plane path node; the control network element receives a third response message from the second user plane path node, where the third response message includes GTP-U tunnel path information allocated by the second user plane path node to the first GTP-U tunnel path; and the control network element sends, to the first user plane path node, the GTP-U tunnel path information allocated by the second user plane path node to the first GTP-U tunnel path.

According to this solution, the control network element may directly interact with the user plane path nodes to establish the GTP-U tunnel path between the user plane path nodes.

With reference to the first aspect, in a possible design, when the user plane path between the plurality of user plane path nodes is a GTP-U tunnel path, that the control network element establishes the user plane path between the plurality of user plane path nodes includes: The control network element sends a fourth request message to a session management function network element, where the fourth request message is used for requesting to establish a first GTP-U tunnel path, the fourth request message includes information about a first user plane path node and information about a second user plane path node, and the information about the first user plane path node and the information about the second user plane path node are used by the session management function network element to establish the first GTP-U tunnel path between the first user plane path node and the second user plane path node, the first user plane path node is any user plane path node in the plurality of user plane path nodes, and the second user plane path node is a user plane path node in the plurality of user plane path nodes that is different from the first user plane path node.

According to this solution, the control network element may trigger the session management network element to establish the GTP-U tunnel path between the user plane path nodes.

With reference to the first aspect, in a possible design, each of the plurality of user plane path nodes is a user plane function network element, the first user plane path node is any user plane function network element in the plurality of user plane path nodes, and the second user plane path node is any user plane function network element in the plurality of user plane path nodes that is different from the first user plane path node.

Alternatively, each of the plurality of user plane path nodes is an access network device, the first user plane path node is any access network device in the plurality of user plane path nodes, and the second user plane path node is any access network device in the plurality of user plane path nodes that is different from the first user plane path node.

Alternatively, the plurality of user plane path nodes include a plurality of access network devices and one target user plane function network element, a first control network element is any access network device in the plurality of access network devices, and the second user plane path node is the target user plane function network element.

Alternatively, the plurality of user plane path nodes include a plurality of access network devices and a plurality of user plane function network elements. When a first control network element is any access network device in the plurality of access network devices, the second user plane path node is a user plane function network element in the plurality of user plane function network elements that corresponds to the first control network element. When the first control network element is any user plane function network element in the plurality of user plane function network elements, the second user plane path node is any user plane function network element in the plurality of user plane function network elements that is different from the first control network element.

According to this solution, a user plane path between user plane function network elements, a user plane path between access network devices, or a user plane path between a user plane function network element and an access network device may be established. This is not limited to an existing user plane path of terminal device-RAN-UPF-DN.

With reference to the first aspect, in a possible design, when the user plane path between the plurality of user plane path nodes is an SRv6 path, that the control network element establishes the user plane path between the plurality of user plane path nodes includes: The control network element sends a fifth request message to a first user plane path node, where the fifth request message is used for requesting to establish a first SRv6 path, the first user plane path node is any user plane path node in the plurality of user plane path nodes, and the fifth request message includes address information of each user plane path node in the plurality of user plane path nodes other than the first user plane path node.

According to this solution, the control network element may directly interact with the user plane path nodes to establish the SRv6 path between the user plane path nodes, thereby reducing interaction signaling between the user plane path nodes and the control network element, and lowering delay.

With reference to the first aspect, in a possible design, that the control network element sends the fifth request message to the first user plane path node includes: The control network element sends the fifth request message to the first user plane path node through a session management function network element.

According to this solution, the control network element may trigger the session management network element to establish the SRv6 path between the user plane path nodes.

With reference to the first aspect, in a possible design, each of the plurality of user plane path nodes is a user plane function network element, and the first user plane path node is any user plane function network element in the plurality of user plane path nodes.

According to this solution, a user plane path between user plane function network elements may be established. This is not limited to an existing user plane path of terminal device-RAN-UPF-DN.

According to a second aspect, a communication apparatus is provided, and is configured to implement the method according to the first aspect. The communication apparatus may be the control network element in the first aspect, or an apparatus including the control network element, or an apparatus included in the control network element, for example, a chip.

The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

With reference to the second aspect, in a possible design, the communication apparatus includes a transceiver module and a processing module. The transceiver module is configured to receive a first message, and the first message indicates to establish a user plane path. The processing module is configured to determine a plurality of user plane path nodes based on the first message, and the user plane path node is a user plane function network element or an access network device. The processing module is further configured to establish a user plane path between the plurality of user plane path nodes.

With reference to the second aspect, in a possible design, the first message indicates to establish a user plane path corresponding to a first service function chain, and the first message includes information indicating a plurality of service functions included in the first service function chain. That the processing module determines the plurality of user plane path nodes based on the first message includes: determining, based on the first message, the plurality of user plane path nodes corresponding to the plurality of service functions included in the first service function chain.

With reference to the second aspect, in a possible design, the first message indicates to establish a user plane path corresponding to a first sensing service, and the first message includes parameter information related to the first sensing service. That the processing module determines the plurality of user plane path nodes based on the first message includes: determining the plurality of user plane path nodes based on the parameter information related to the first sensing service.

With reference to the second aspect, in a possible design, the user plane path between the plurality of user plane path nodes is a general packet radio service tunneling protocol for the user plane GTP-U tunnel path or a segment routing over internet protocol version 6 IPv6 SRv6 path.

With reference to the second aspect, in a possible design, when the user plane path between the plurality of user plane path nodes is a GTP-U tunnel path, that the processing module establishes the user plane path between the plurality of user plane path nodes includes: The transceiver module sends a second request message to a first user plane path node, where the second request message is used for requesting to establish a first GTP-U tunnel path, and the first user plane path node is any user plane path node in the plurality of user plane path nodes; the transceiver module receives a second response message from the first user plane path node, where the second response message includes GTP-U tunnel path information allocated by the first user plane path node to the first GTP-U tunnel path; the transceiver module sends a third request message to a second user plane path node, where the third request message is used for requesting to establish the first GTP-U tunnel path, the third request message includes the GTP-U tunnel path information allocated by the first user plane path node to the first GTP-U tunnel path, and the second user plane path node is a user plane path node in the plurality of user plane path nodes that is different from the first user plane path node; the transceiver module receives a third response message from the second user plane path node, where the third response message includes GTP-U tunnel path information allocated by the second user plane path node to the first GTP-U tunnel path; and the transceiver module sends, to the first user plane path node, the GTP-U tunnel path information allocated by the second user plane path node to the first GTP-U tunnel path.

With reference to the second aspect, in a possible design, when the user plane path between the plurality of user plane path nodes is a GTP-U tunnel path, that the processing module establishes the user plane path between the plurality of user plane path nodes includes: The transceiver module sends a fourth request message to a session management function network element, where the fourth request message is used for requesting to establish a first GTP-U tunnel path, the fourth request message includes information about a first user plane path node and information about a second user plane path node, and the information about the first user plane path node and the information about the second user plane path node are used by the session management function network element to establish the first GTP-U tunnel path between the first user plane path node and the second user plane path node, the first user plane path node is any user plane path node in the plurality of user plane path nodes, and the second user plane path node is a user plane path node in the plurality of user plane path nodes that is different from the first user plane path node.

With reference to the second aspect, in a possible design, each of the plurality of user plane path nodes is a user plane function network element, the first user plane path node is any user plane function network element in the plurality of user plane path nodes, and the second user plane path node is any user plane function network element in the plurality of user plane path nodes that is different from the first user plane path node. Alternatively, each of the plurality of user plane path nodes is an access network device, the first user plane path node is any access network device in the plurality of user plane path nodes, and the second user plane path node is any access network device in the plurality of user plane path nodes that is different from the first user plane path node. Alternatively, the plurality of user plane path nodes include a plurality of access network devices and one target user plane function network element, the first user plane path node is any access network device in the plurality of access network devices, and the second user plane path node is the target user plane function network element. Alternatively, the plurality of user plane path nodes include a plurality of access network devices and a plurality of user plane function network elements. When the first user plane path node is any access network device in the plurality of access network devices, the second user plane path node is a user plane function network element in the plurality of user plane function network elements that corresponds to the first user plane path node. When the first user plane path node is any user plane function network element in the plurality of user plane function network elements, the second user plane path node is any user plane function network element in the plurality of user plane function network elements that is different from the first user plane path node.

With reference to the second aspect, in a possible design, when the user plane path between the plurality of user plane path nodes is an SRv6 path, that the processing module establishes the user plane path between the plurality of user plane path nodes includes: The transceiver module sends a fifth request message to the first user plane path node, where the fifth request message is used for requesting to establish a first SRv6 path, the first user plane path node is any user plane path node in the plurality of user plane path nodes, and the fifth request message includes address information of each user plane path node in the plurality of user plane path nodes other than the first user plane path node.

With reference to the second aspect, in a possible design, that the transceiver module sends the fifth request message to the first user plane path node includes: sending the fifth request message to the first user plane path node through a session management function network element.

With reference to the second aspect, in a possible design, each of the plurality of user plane path nodes is a user plane function network element, and the first user plane path node is any user plane function network element in the plurality of user plane path nodes.

According to a third aspect, a communication apparatus is provided, and includes a processor. The processor is configured to execute instructions stored in a memory. When the processor executes the instructions, the communication apparatus is enabled to perform the method according to any one of the foregoing aspects. The communication apparatus may be the control network element in the first aspect.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is located outside the communication apparatus.

According to fourth aspect, a communication apparatus is provided, and includes a processor and an interface circuit. The interface circuit is configured to communicate with a module outside the communication apparatus. The processor is configured to perform the method according to any one of the foregoing aspects by using a logic circuit or by running a computer program or computer instructions. The communication apparatus may be the control network element in the first aspect.

Alternatively, the interface circuit may be a code/data read/write interface circuit. The interface circuit is configured to receive computer-executable instructions (where the computer-executable instructions are stored in a memory, and may be directly read from the memory, or may be read by using another component) and transmit the computer-executable instructions to the processor, so that the processor runs the computer-executable instructions to perform the method according to any one of the foregoing aspects.

In some possible designs, the communication apparatus may be a chip or a chip system.

According to a fifth aspect, this application provides a computer-readable storage medium. The computer-readable storage medium stores instructions. When the instructions are run, the user plane path management method performed by the control network element in the first aspect or the possible designs of the first aspect is performed.

According to a sixth aspect, this application provides a computer program product including instructions. When the computer program product runs on a computer, the computer is enabled to perform the user plane path management method performed by the control network element in the first aspect or the possible designs of the first aspect.

According to a seventh aspect, a communication apparatus (for example, the communication apparatus may be a chip or a chip system) is provided. The communication apparatus includes a processor, configured to implement a function in any one of the foregoing aspects. In a possible design, the communication apparatus further includes a memory, and the memory is configured to store necessary program instructions and data. When the communication apparatus is a chip system, the communication apparatus may include a chip, or may include a chip and another discrete component.

According to an eighth aspect, a communication system is provided. The communication system includes a control network element and user plane path nodes. The control network element is configured to implement the method according to the first aspect.

For technical effects brought by any one of the designs of the second aspect to the eighth aspect, refer to the technical effects brought by the different designs of the first aspect. Details are not described herein again.

### BRIEF DESCRIPTION OF DRAWINGS

FIG. 1 is a diagram of a structure of a user plane protocol stack according to an embodiment of this application;
FIG. 2 is a diagram of a structure of a communication system according to an embodiment of this application;
FIG. 3 is a diagram of a structure of a communication apparatus according to an embodiment of this application;
FIG. 4 is a schematic flowchart of a user plane path management method according to an embodiment of this application;
FIG. 5 is an interaction diagram of a user plane path management method according to an embodiment of this application;
FIG. 6 is an interaction diagram of another user plane path management method according to an embodiment of this application; and
FIG. 7 is a diagram of a structure of another communication apparatus according to an embodiment of this application.

### DESCRIPTION OF EMBODIMENTS

For ease of understanding of the technical solutions in embodiments of this application, related technologies of this application are first briefly described as follows.

### 1. Service function chain (service function chain, SFC) service

A service function chain is a technology that provides ordered services for an application layer. The service function chain is used for connecting service functions (service functions, SFs) at a logical layer to form an ordered service combination. During transmission on a network, a data packet can pass through a device with various service functions along a specified path, ensuring that the network can provide a service for a user according to a preset plan. For example, the service function may be a firewall (firewall, FW), a load balancer (load balancer, LB), an intrusion prevention system (intrusion prevention system, IPS), or the like.

### 2. User plane path on a 5G network

Before performing a data service, a terminal device first needs to register with the 5G network, and establishes a PDU session. Establishment of the PDU session means to establish a connection for sending and receiving data. Based on a service requirement, the connection for sending and receiving data may be an internet protocol (internet protocol, IP) connection, and a corresponding IP address is allocated by a UPF network element. Certainly, the connection for sending and receiving data may alternatively be a non-IP connection, and the non-IP connection may be, for example, bound to a media access control (media access control, MAC) address.

When the PDU session is established by the terminal device on a network, a user plane path corresponding to the PDU session is established. Specifically, a process of establishing the user plane path corresponding to the PDU session mainly includes: The terminal device sends a session establishment request message carrying a DNN corresponding to the session, and the session establishment request message reaches an SMF network element through a RAN network element and an AMF network element that are accessed by the terminal device. The SMF network element selects a UPF network element as an anchor of the session based on information such as the DNN and a network topology. The UPF network element and the RAN respectively allocate tunnel information of the UPF network element and the RAN, and exchange the tunnel information through the SMF network element, to establish an uplink transmission channel and a downlink transmission channel, so as to complete establishment of the user plane path corresponding to the PDU session.

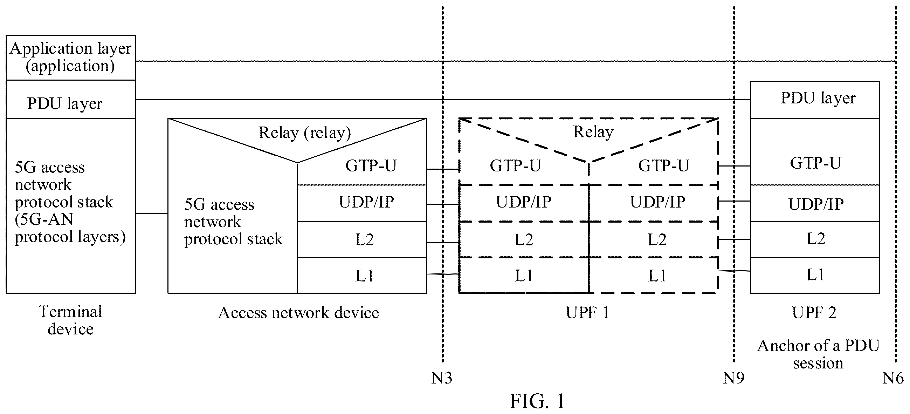

FIG. 1 shows a user plane protocol stack of an existing 5G network. A UPF 1 is an intermediate UPF network element serving a terminal device, and a UPF 2 is an anchor of a PDU session. A connection for sending and receiving data is located at a PDU layer, and the PDU layer is an end-to-end protocol layer from the terminal device to the UPF 2. An application (application, APP) layer is above the PDU layer of the terminal device. Below the PDU layer, different 3rd generation partnership project (3rd generation partnership project, 3GPP) network protocol stacks from the terminal device to an access network device, from the access network device to the UPF 1, and from the UPF 1 to the UPF 2 are interconnected. Specifically, a 3GPP network protocol stack between the terminal device and the access network device is a 5G access network protocol stack. A 3GPP network protocol stack between the access network device and the UPF 1 includes a GTP-U layer and lower protocol layers. The lower protocol layers include a user datagram protocol (user datagram protocol, UDP) layer/IP layer, a level 2 (level 2, L2), and L1. Layers in a 3GPP network protocol stack between the UPF 2 and the UPF 2 is the same as layers in a 3GPP network protocol stack between the access network device and a UPF network element 1. Details are not described herein again. The access network device is connected to the UPF 1 through an N3 interface (N3 for short), the UPF 1 may be connected to the UPF 2 through an N9 interface (N9 for short), and the UPF 2 may access a DN through an N6 interface (N6 for short). The terminal device may access a DN data service through a user plane path shown in FIG. 1.

It should be noted that names of the interfaces between network elements in FIG. 1 are merely examples, and the names of the interfaces may be other names in specific implementations. This is not specifically limited in embodiments of this application.

In embodiments of this application, for a service packet, the access network device does not sense the APP layer and the PDU layer. Therefore, as shown in FIG. 1, the APP layer and the PDU layer correspond to a relay (relay) on an access network device side. In other words, the access network device has a function of forwarding data or performing transparent transmission of data from the APP layer and the PDU layer. In addition, the APP layer in embodiments of this application may be considered as a load layer. Centralized descriptions are provided herein, and details are not described below again.

It can be learned from the foregoing process of establishing the user plane path corresponding to the PDU session and the user plane protocol stack of the 5G network shown in FIG. 1 that a user plane path in the current 5G network is fixed, that is, terminal device-RAN-UPF-DN, and a user plane transmission channel from the terminal device to the DN may be maintained, so that the terminal device is enabled to access the DN data service. However, an existing user plane path establishment mechanism is applicable only to a scenario in which the terminal device accesses the DN data service, and the user plane path is fixed, that is, terminal device-RAN-UPF-DN. However, in a future network, a new service may not be limited to the terminal device accessing the DN data service. For example, the following cases may occur in the future network:
1. A trigger condition for establishing a user plane path changes: Different from that a user plane path corresponding to a PDU session needs to be established when a terminal device establishes the PDU session, a user plane path corresponding to a new service in a future network may be established in advance. For example, for a service function chain (service function chain, SFC) across a mobile edge computing (mobile edge computing, MEC)/edge data center (data Center, DC), service functions (service functions, SFs) (or referred to as service nodes) in the service function chain is distributed in different MECs/DCs. After SF distribution is determined, a user plane path corresponding to the SFC may be established in advance, and a related user is subsequently redirected to the user plane path.
2. Two endpoints of a user plane path change: Different from that a user plane path corresponding to a PDU session is from a terminal device to a DN, a user plane path corresponding to a new service in a future network may not need a terminal device or a DN. For example, for a sensing service, only user plane paths between a RAN and a RAN and between a RAN and a UPF may be involved.

Therefore, a new method for managing a user plane path is needed to meet a requirement of a new service for a user plane path.

The following describes the technical solutions in embodiments of this application with reference to the accompanying drawings in embodiments of this application. In descriptions of this application, unless otherwise specified, "/" indicates that associated objects are in an "or" relationship. For example, A/B may indicate A or B. In this application, "and/or" merely describes an association relationship between associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used for representing giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

Terms such as "component", "module", and "system" used in this application indicate computer-related entities. The computer-related entities may be hardware, firmware, combinations of hardware and software, software, or software in running. For example, a component may be, but is not limited to, a process that runs on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component, where the component interacts with another component in a local system or a distributed system, and/or interacts with another system via a network such as the Internet by using a signal).

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In embodiments of this application, information (information), signal (signal), message (message), and channel (channel) may sometimes be interchangeably used. It should be noted that meanings expressed by the terms are consistent when differences of the terms are not emphasized. Terms "of (of)", "corresponding (corresponding, relevant)", and "corresponding (corresponding)" may sometimes be interchangeably used. It should be noted that meanings expressed by the terms are consistent when differences of the terms are not emphasized.

The technical solutions in embodiments of this application may be applied to various communication systems. The communication system may be a 3rd generation partnership project (3rd generation partnership project, 3GPP) communication system, for example, a long term evolution (long term evolution, LTE) system, a 5G system, an internet of things (internet of things, IoT) system, a non-terrestrial network (non-terrestrial network, NTN) system, a vehicle-to-everything (vehicle-to-everything, V2X) system, a device-to-device (device-to-device, D2D) communication system, a machine-to-machine (machine-to-machine, M2M) communication system, or another new system similar to a future-oriented communication system, for example, a sixth-generation (sixth-generation, 6G) system. This is not specifically limited in embodiments of this application. In addition, terms "system" and "network" are interchangeable.

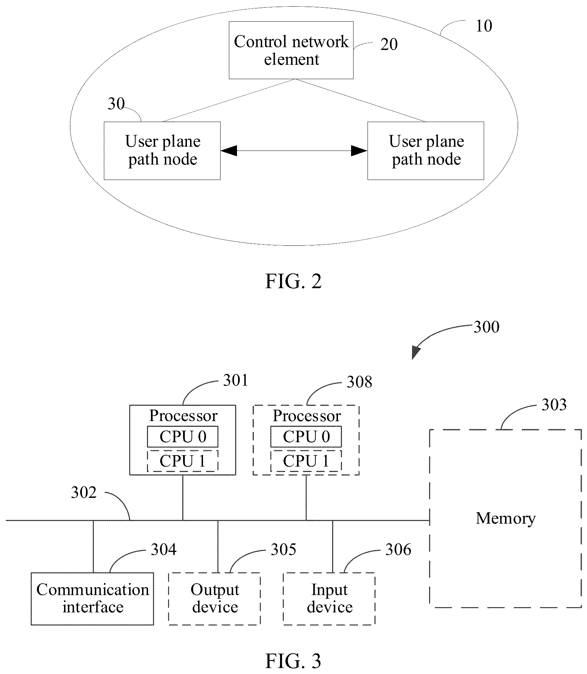

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems. The following describes the technical solutions provided in this application by using a network architecture shown in FIG. 2 as an example.

FIG. 2 shows a communication system 10 according to an embodiment of this application. The communication system 10 includes a control network element 20 and a plurality of user plane path nodes 30.

It may be understood that FIG. 2 is merely an example diagram, and does not constitute a limitation on a quantity of control network elements 20 or user plane path nodes 30 in the communication system 10. In the communication system 10, there may be more than one control network element 20, and there may be more than two user plane path nodes 30.

Optionally, different user plane path nodes 30 may communicate with each other. The user plane path node 30 may be a user plane function network element or an access network device.

Optionally, the control network element 20 and the user plane path nodes 30 may communicate with each other.

Optionally, the control network element 20 and/or the user plane path nodes 30 may be at a fixed location, or may be movable.

For example, the control network element 20 interacts with the user plane path nodes 30 shown in FIG. 2. In a user plane path management method provided in embodiments of this application, the control network element 20 receives a first message, and the first message indicates to establish a user plane path. The control network element 20 determines the plurality of user plane path nodes 30 based on the first message, and the control network element 20 further establishes the user plane path between the plurality of user plane path nodes 30. Specific implementations and technical effects of this solution are described in detail in subsequent method embodiments. Details are not described herein.

The control network element 20 is a logical function network element, and may be a new network element different from an existing network element or may be integrated into a session management network element.

Optionally, an access network device in embodiments of this application may be any communication device that has a wireless transceiver function and that is configured to communicate with a terminal device. The access network device may include various forms of base stations (base stations), for example, a macro base station, a micro base station (also referred to as a small cell), an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), or a transmission reception point (transmission reception point, TRP). Alternatively, the access network device may be a RAN device in a 5G system, for example, a next generation NodeB (next generation NodeB, gNB), or one antenna panel or a group (including a plurality of antenna panels) of antenna panels of a base station in the 5G system. Alternatively, the access network device may be a module or a unit that completes some functions of the base station, for example, may be a central unit (central unit, CU) in a cloud access network (cloud radio access network, C-RAN) system, or may be a distributed unit (distributed unit, DU). Alternatively, the access network device may be a device that implements a base station function in an evolved communication system after 5G, a mobile switching center, a device that implements a base station function in a D2D, V2X, or M2M communication system, or the like. Alternatively, the access network device may be a base station in a non-terrestrial network (non-terrestrial network, NTN) communication system, that is, may be deployed on a high-altitude platform or a satellite.

Optionally, the user plane function network element in embodiments of this application may be configured to: route and forward a packet, perform quality of service (quality of service, QoS) processing on user plane data, and the like. In a 5G communication system, a network element or an entity corresponding to the user plane network element may be a UPF network element in a 5G network architecture. In a future communication system, the user plane network element may still be a UPF network element, or the user plane network element may have another name. This is not limited in embodiments of this application.

In addition, optionally, the terminal device in embodiments of this application may be a device with a wireless transceiver function, and may also be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. Alternatively, the terminal device may be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication device carried on a high-altitude aircraft, a wearable device, an uncrewed aerial vehicle, a robot, a smart point of sale (point of sale, POS) machine, a machine-type communication device, a terminal device in D2D, a vehicle-mounted terminal device in V2X, an on-board unit (on-board unit, OBU), a vehicle-mounted communication terminal (telematics box, T-box), a vehicle or a road side unit (road side unit, RSU), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used for the terminal device are not limited in embodiments of this application. For example, the terminal device may alternatively be a chip or a module. All or some functions of the terminal device may alternatively be implemented by using a software function running on hardware, or may be implemented by using a virtualization function instantiated on a platform (for example, a cloud platform).

Optionally, the communication system 10 shown in FIG. 2 is applicable to a 5G network, or is applicable to another future network, or the like. This is not specifically limited in embodiments of this application.

For example, the communication system 10 shown in FIG. 2 is applicable to the 5G network. In this case, a network element or an entity corresponding to the access network device may be a RAN device in the 5G network, and a network element or an entity corresponding to the user plane function network element may be a UPF network element in the 5G network. If the control network element is integrated into the session management network element, a network element or an entity corresponding to the session management network element may be an SMF network element in the 5G network. For related function descriptions, refer to an existing standard. Details are not described herein.

Optionally, the control network element or the user plane path node in embodiments of this application may also be referred to as a communication apparatus, and may be a general-purpose device or a dedicated device. This is not specifically limited in embodiments of this application.

Optionally, a related function of the control network element or the user plane path node in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualization function instantiated on a platform (for example, a cloud platform).

For example, the related function of the control network element or the user plane path node in embodiments of this application may be implemented by using the communication apparatus 300 in FIG. 3. FIG. 3 is a diagram of a structure of a communication apparatus 300 according to an embodiment of this application. The communication apparatus 300 includes one or more processors 301, a communication line 302, and at least one communication interface (in FIG. 3, only an example in which a communication interface 304 and one processor 301 are included is used for description). Optionally, the communication apparatus 300 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for connecting different components.

The communication interface 304 may be a transceiver module configured to communicate with another device or a communication network, for example, an Ethernet, a RAN, or a wireless local area network (wireless local area network, WLAN). For example, the transceiver module may be an apparatus, for example, a transceiver or a transceiver machine. Optionally, the communication interface 304 may alternatively be a transceiver circuit located inside the processor 301, and is configured to implement signal input and signal output of the processor.

The memory 303 may be an apparatus having a storage function. The memory 303 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessible by a computer, but is not limited thereto. The memory may exist independently, and is connected to the processor through the communication line 302. The memory may alternatively be integrated with the processor.

The memory 303 is configured to store computer-executable instructions for executing the solutions in this application under control of the processor 301. The processor 301 is configured to execute the computer-executable instructions stored in the memory 303, to implement the user plane path management method provided in embodiments of this application.

Alternatively, optionally, in this embodiment of this application, the processor 301 may perform functions related to processing in a user plane path management method provided in the following embodiments of this application. The communication interface 304 is responsible for communicating with another device or a communication network. This is not specifically limited in this embodiment of this application.

Optionally, the computer-executable instructions in this embodiment of this application may also be referred to as application program code. This is not specifically limited in this embodiment of this application.

In a specific implementation, in an embodiment, the processor 301 may include one or more CPUs, for example, a CPU 0 and a CPU 1 in FIG. 3.

In a specific implementation, in an embodiment, the communication apparatus 300 may include a plurality of processors, for example, the processor 301 and a processor 308 in FIG. 3. Each of the processors may be a single-core (single-core) processor or may be a multi-core (multi-core) processor. The processor herein may include but is not limited to at least one of the following: various types of computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform an operation or processing.

In a specific implementation, in an embodiment, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, a projector (projector), or the like. The input device 306 communicates with the processor 301, and may receive an input from a user in a plurality of manners. For example, the input device 306 may be a mouse, a keyboard, a touchscreen device, or a sensor device.

The foregoing communication apparatus 300 may be a general-purpose device or a dedicated device. For example, the communication apparatus 300 may be a desktop computer, a portable computer, a network server, a personal digital assistant (personal digital assistant, PDA), a mobile phone, a tablet computer, a wireless terminal device, an embedded device, or a device having a structure similar to that in FIG. 3. A type of the communication apparatus 300 is not limited in this embodiment of this application.

With reference to the accompanying drawings, the following describes the user plane path management method provided in embodiments of this application.

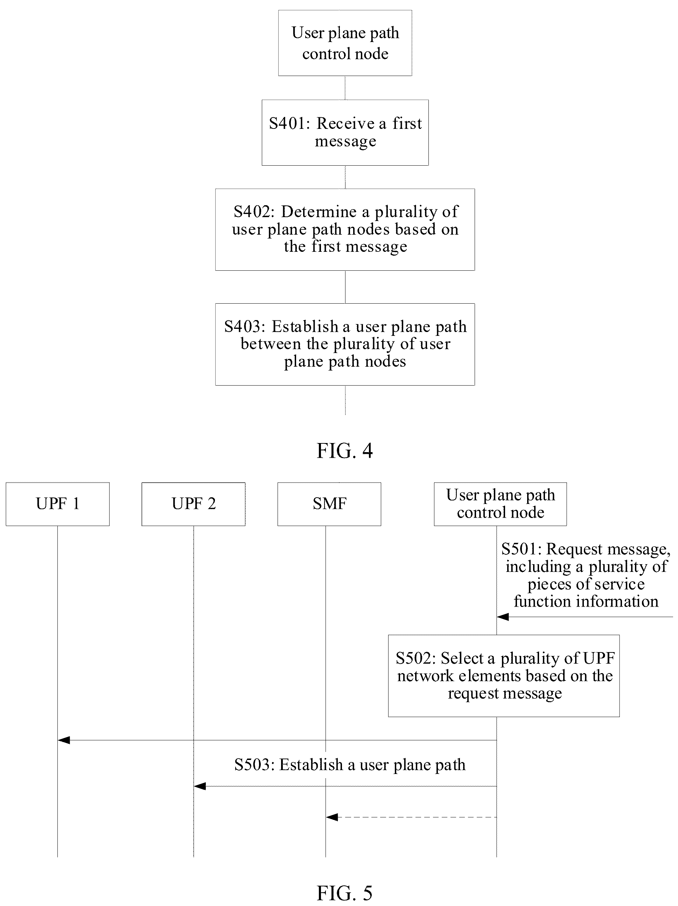

FIG. 4 shows a user plane path management method according to an embodiment of this application. The method includes the following steps.

S401: A control network element receives a first message, where the first message indicates to establish a user plane path.

In S401, after receiving the first message, the control network element determines, based on the first message, that the user plane path needs to be established.

Optionally, based on different services corresponding to the first message, the first message may be from different network elements.

For example, when a user plane path is established for a service function chain, the first message may come from an operations, administration and maintenance (operations, administration and maintenance, OAM) network element. Further, in this case, the first message may be a service function chain establishment request message sent by the OAM network element. After receiving the service function chain establishment request message, the control network element establishes a corresponding user plane path for a service function chain that the service function chain establishment request message requests to establish.

For example, when a user plane path is established for a sensing service, the first message may be from an application function (application function, AF) network element. Further, in this case, the first message may be a sensing service request message sent by the AF network element. After receiving the sensing service request message, the control network element establishes a user plane path for a sensing service that the sensing service request message requests to establish.

S402: The control network element determines a plurality of user plane path nodes based on the first message.

The user plane path nodes are network elements that may be connected to each other (where the connection herein means a wireless connection that can be used for communication) to form a user plane path. In this embodiment of this application, the user plane path node may be a user plane function network element or an access network device.

Optionally, based on different services, the control network element determines the user plane path nodes based on the first message in different specific implementations. This may include the following case 1 or case 2.

Case 1: The first message indicates to establish a user plane path for a service function chain. The service function chain indicated by the first message is referred to as a first service function chain in the following.

In the case 1, the first message may include indication information indicating a plurality of service functions included in the first service function chain. For example, the service functions may include but are not limited to a firewall (firewall, FW) function, a network address translation (network address translation, NAT) function, a transmission control protocol (transmission control protocol, TCP) acceleration function, a load balancer (load balancer, LB), an intrusion prevention system (intrusion prevention system, IPS) function, and the like.

After receiving the first message, the control network element determines, based on the indication information included in the first message, the plurality of service functions included in the first service function chain, and determines user plane function network elements respectively corresponding to the plurality of service functions as the plurality of user plane path nodes needed for establishing the user plane path corresponding to the first service function chain.

In a possible implementation, the indication information that is in the first message and that indicates the plurality of service functions included in the first service function chain may be identification information of the plurality of service functions. After receiving the first message, the control network element determines corresponding service functions based on the identification information of the plurality of service functions that is included in the first message.

For example, it is assumed that the service functions included in the first service function chain include a firewall function, a network address translation function, and a transmission control protocol acceleration function. The first message may include identification information of the three service functions, where identification information of the firewall function is #1, identification information of the network address translation function is #2, and identification information of the transmission control protocol acceleration function is #3. After receiving the first message, the control network element searches an identification information table of preset service functions for the identification information #1, the identification information #2, and the identification information #3, and determines that the identification information #1 corresponds to the firewall function, the identification information #2 corresponds to the network address translation function, and the transmission control protocol acceleration function corresponds to the identification information #3, so as to determine that the first service function chain includes the firewall function, the network address translation function, and the transmission control protocol acceleration function.

In another possible implementation, the control network element may preconfigure a correspondence between a service function chain and service functions included in the service function chain. The service function chain preconfigured by the control network element may be referred to as a preset service function chain. Information that is in the first message and that indicates the plurality of service functions included in the first service function chain may be identification information of the preset service function chain corresponding to the plurality of service functions. After receiving the first message, the control network element determines the corresponding preset service function chain based on the identification information of the service function chain included in the first message, to determine the plurality of service functions corresponding to the preset service function chain. For example, the identification information of the service function chain may be an SFC identity document (SFC ID).

For example, it is assumed that the control network element maintains a mapping table between different service function chains and corresponding service functions. A service function chain with an SFC ID of #1 corresponds to a firewall function and a network address translation function, a service function chain with an SFC ID of #2 corresponds to a network address translation function and a transmission control protocol acceleration function, and a service function chain with an SFC ID of #3 corresponds to a firewall function, a network address translation function, and a transmission control protocol acceleration function. The first message received by the control network element indicates to establish the first service function chain, and the first message includes an SFC ID1. The control network element determines, based on a preconfigured mapping relationship, that the SFC ID1 corresponds to a firewall function and a network address translation function, so as to determine that the first service function chain includes the firewall function and the network address translation function.

Further, in this application, the user plane function network elements respectively corresponding to the plurality of service functions included in the first service function chain may be determined in the following manner. In a possible implementation, the control network element may preconfigure the plurality of user plane function network elements and information about a service function deployed on each user plane function network element, to determine a user plane function network element corresponding to each of the plurality of service functions included in the first service function chain. In another possible implementation, another function network element like a session management network element or a network repository function (Network Repository Function, NRF) network element, is preconfigured with a plurality of user plane function network elements and information about a service function deployed on each user plane function network element. The control network element may query, from another network element, user plane function network elements respectively corresponding to the plurality of service functions included in the first service function chain, or the control network element may obtain, from the another network element, information about preconfigured service functions deployed on the user plane function network elements, and determine the user plane function network elements respectively corresponding to the plurality of service functions included in the first service function chain.

Case 2: The first message indicates to establish a user plane path for a sensing service. The sensing service indicated by the first message is referred to as a first sensing service in the following.

In the case 2, the first message may include parameter information related to the first sensing service, for example, location information corresponding to the first sensing service or sensing accuracy information corresponding to the first sensing service.

The location information corresponding to the first sensing service may indicate a location of a target object of the first sensing service. Optionally, the target object of the first sensing service may include one or more target objects, and the target object may include but is not limited to a cell, a tracking area, a user, and the like.

Optionally, the location information corresponding to the first sensing service may include one or more types of area information of different granularities.

For example, assuming that the first sensing service is a meteorological monitoring service, and a target object of the first sensing service is a first cell, the location information corresponding to the first sensing service may include identification information of the first cell and identification information of a tracking area in which the first cell is located. For example, assuming that the first sensing service is a meteorological monitoring service, and a target object of the first sensing service is a tracking area (tracking area, TA) 1, the location information corresponding to the first sensing service may be identification information of the tracking area 1, or longitude and latitude information of the tracking area 1. For another example, assuming that the first sensing service is a health detection service, and a target object of the first sensing service is a user 1, the location information corresponding to the first sensing service may be longitude and latitude information of the user 1.

Optionally, the location information corresponding to the first sensing service may respectively indicate locations of a plurality of target objects of the first sensing service or a plurality of locations corresponding to the target objects. For example, assuming that the first sensing service is a meteorological monitoring service, and target objects of the first sensing service are a tracking area 1 and a tracking area 2, the location information corresponding to the first sensing service may include identification information of the tracking area 1 and the tracking area 2. For another example, assuming that the first sensing service is a health detection service, and a target object of the first sensing service is a user 1, the location information corresponding to the first sensing service may include information about a home location of the user 1 and information about a company location of the user 1.

Optionally, the sensing accuracy information corresponding to the first sensing service may correspond to the location information of the first sensing service. For example, assuming that the location information corresponding to the first sensing service includes identification information of a tracking area 1 and a tracking area 2, the sensing accuracy information of the first sensing service may include sensing accuracy information corresponding to the tracking area 1 and sensing accuracy information corresponding to the tracking area 2.

Optionally, the sensing accuracy information corresponding to the first sensing service may include accuracy information in one or more different dimensions. For example, the sensing accuracy information corresponding to the first sensing service may include at least one piece of the following information: distance accuracy (range accuracy) information, velocity accuracy (velocity accuracy) information, and angle accuracy (angle accuracy) information. The distance accuracy is used for identifying a distance calibration error rate, the angle accuracy is used for identifying an amplitude-phase error caused by factors such as an antenna manufacturing tolerance and phase shifter inconsistency, and the velocity accuracy is used for identifying an error rate of a moving velocity of a target object.

For example, the parameter information related to the first sensing service may further include one or more pieces of the following information: information indicating a validity period of the first sensing service, information indicating a type of the first sensing service, information indicating a maximum sensing distance of the first sensing service, and information indicating a maximum sensing velocity of the first sensing service.

After receiving the first message, the control network element may determine or select a plurality of access network devices as a plurality of user plane path nodes based on the parameter information that is related to the first sensing service and that is included in the first message.

Optionally, when the first message includes the location information corresponding to the first sensing service, the control network element may determine, based on the location information corresponding to the first sensing service, a location of the target object of the first sensing service, or may determine an area in which the target object of the first sensing service is located. The control network element may select an access network device whose service range includes a location of the target object, or may select an access network device in an area in which the target object is located as a user plane path node.

For example, assuming that the first message indicates that the target object of the first sensing service is the tracking area 1, the control network element may select an access network device 1, an access network device 2, and an access network device 3 in the tracking area 1 as the user plane path nodes.

Optionally, when the first message includes the sensing accuracy information corresponding to the first sensing service, the control network element may determine, based on the sensing accuracy information corresponding to the first sensing service, a quantity of access network devices that need to be selected. In a possible implementation, high sensing accuracy corresponding to the first sensing service indicates a large quantity of access network devices that need to be selected by the control network element; otherwise, low sensing accuracy corresponding to the first sensing service indicates a small quantity of access network devices.

For example, the control network element may preset a mapping relationship between an interval in which a value of the sensing accuracy is located and a quantity of access network devices. When the value of the sensing accuracy is in an interval 1, the control network element determines that x access network devices need to be selected. When the value of the sensing accuracy is in an interval 2, the control network element determines that y access network devices need to be selected.

Optionally, in addition to the plurality of determined access network devices, the control network element may further determine or select one or more user plane function network elements as the user plane path nodes. For example, the control network element may further determine one or more user plane function network elements when there is a long distance between the plurality of determined access network devices in an area, or when there is a large quantity of determined access network devices, to assist in implementing data transmission between the plurality of access network devices.

Optionally, when the plurality of determined access network devices are close to each other, for example, the plurality of access network devices belong to a same access ring (where the access ring is ring networking formed by a plurality of access devices), the control network element may no longer further select one or more user plane function network elements as the user plane path nodes, that is, the control network element selects the plurality of access network devices as the user plane path nodes.

When the control network element may further determine or select one or more user plane function network elements as the user plane path nodes, optionally, the control network element may select, from a plurality of access network devices, user plane function network elements respectively corresponding to the one or more access network devices as the user plane path nodes. In a possible implementation, the user plane function network element corresponding to the access network device may be a user plane function network element that may establish a connection to the access network device in ring networking.

S403: The control network element establishes the user plane path between the plurality of user plane path nodes.

In S403, the control network element may establish one or more user plane paths based on the plurality of selected user plane path nodes.

One user plane path node may establish a user plane path with another user plane path node, or may establish a user plane path with a plurality of other user plane path nodes. In other words, the control network element may establish user plane paths of a plurality of different structures based on the plurality of user plane path nodes. A specific structure of the user plane path is not limited in embodiments of this application. For example, assuming that the control network element selects a user plane path node 1, a user plane path node 2, and a user plane path node 3, an established user plane path may be in a star topology of the user plane path node 1-the user plane path node 2-the user plane path node 3. Alternatively, the established user plane path may be a fully interconnected structure, for example, the user plane path node 1-the user plane path node 2, the user plane path node 1-the user plane path node 3, and the user plane path node 2-the user plane path node 3.

Optionally, the control network element may determine user plane path nodes at two ends of a user plane path based on an application scenario, the user plane path nodes, and other factors.

For example, when a user plane path is established for a service function chain service, the user plane path may be established between corresponding user plane path nodes based on a sequence of service functions in the service function chain.

For example, assuming that a sequence of service functions in the service function chain is: a service function 1 to a service function 2 to a service function 3, where the service function 1 corresponds to a user plane function network element 1, the service function 2 corresponds to a user plane function network element 2, and the service function 3 corresponds to a user plane function network element 3, the control network element may establish a user plane path in a sequence of the user plane function network element 1 to the user plane function network element 2 to the user plane function network element 3.

Optionally, the user plane path may be a GTP-U tunnel path or an SRv6 path.

Optionally, whether the user plane path is a GTP-U tunnel path or an SRv6 path may be determined according to a local policy, may be determined based on an expectation of an operator, or may be determined based on a function characteristic of a device. For example, if the user plane path nodes do not support SRv6, the GTP-U tunnel path may be selected as the user plane path between the user plane path nodes.

Any user plane path node selected by the control network element from the plurality of user plane path nodes is referred to as a first user plane path node, and one user plane path node in the plurality of user plane path nodes that is different from the first user plane path node is referred to as a second user plane path node. A specific implementation of establishing a user plane path between the plurality of user plane path nodes by the user plane path node is described below by using an example in which a user plane path is established between the first user plane path node and the second user plane path node.

In a possible implementation, the control network element may establish a GTP-U tunnel path between the first user plane path node and the second user plane path node. The GTP-U tunnel path between the first user plane path node and the second user plane path node is referred to as a first GTP-U tunnel path in the following, and a specific implementation of establishing the first GTP-U tunnel path by the control network element is described.

When the control network element can directly exchange a message (or directly communicate) with the user plane path nodes, that the control network element establishes the first GTP-U tunnel path between the first user plane path node and the second user plane path node includes the following steps.
(1) The control network element may send a second request message to the first user plane path node, where the second request message is used for requesting to establish the first GTP-U tunnel path.
(2) After receiving the second request message, the first user plane path node allocates GTP-U tunnel information to the first GTP-U tunnel path based on the second request message.
   The GTP-U tunnel information allocated by the first user plane path node includes at least one piece of the following information: an IP address of the first user plane path node, identification information of a first endpoint, and a user datagram protocol (user datagram protocol, UDP) port number. The first endpoint is an endpoint that is allocated by the first user plane path node to the first GTP-U tunnel path and that is deployed on the first user plane path node. For example, the identification information of the first endpoint may be a tunnel endpoint identifier (tunnel endpoint identifier, TE ID).
(3) The first user plane path node sends, to the control network element, a response message (which may be referred to as a second response message) that corresponds to the second request message and that carries the allocated GTP-U tunnel information.
(4) After receiving the second response message, the control network element sends a third request message to the second user plane path node, where the third request message is used for requesting to establish the first GTP-U tunnel path, and the third request message includes the GTP-U tunnel information allocated by the first user plane path node.
(5) After receiving the third request message, the second user plane path node allocates GTP-U tunnel information to the first GTP-U tunnel path based on the third request message.
   The GTP-U tunnel information allocated by the second user plane path node includes at least one piece of the following information: an IP address of the second user plane path node, identification information of a second endpoint, and a UDP port number. The second endpoint is another endpoint that is allocated by the second user plane path node to the first GTP-U tunnel path and that is deployed on the second user plane path node. For example, the identification information of the second endpoint may be a TE ID.
(6) The second user plane path node sends, to the control network element, a response message (which may be referred to as a third response message) that corresponds to the third request message and that carries the allocated GTP-U tunnel information.
(7) After receiving the third response message, the control network element sends, to the first user plane path node, the GTP-U tunnel information allocated by the second user plane path node, and correspondingly, the first user plane path node receives the GTP-U tunnel information allocated by the second user plane path node.

In this case, the first user plane path node and the second user plane path node exchange GTP-U tunnel information respectively, and the GTP-U tunnel path between the first user plane path node and the second user plane path node is established. That is, a user plane function path between the first user plane path node and the second user plane path node is established.

When the control network element cannot directly exchange a message with the user plane path nodes, that the control network element establishes the first GTP-U tunnel path between the first user plane path node and the second user plane path node includes the following steps.
(1) The control network element sends a fourth request message to the session management function network element, where the fourth request message is used for requesting to establish the first GTP-U tunnel path.
   The fourth request message includes information about the first user plane path node and information about the second user plane path node, and may be used for determining the first user plane path node and the second user plane path node. For example, the fourth request message may include identification information or IP addresses of the first user plane path node and the second user plane path node.
(2) After receiving the fourth request message, the session management network element determines the first user plane path node and the second user plane path node based on the fourth request message, and establishes the first GTP-U tunnel path between the first user plane path node and the second user plane path node.

For a specific step of establishing, by the session management network element, the first GTP-U tunnel path between the first user plane path node and the second user plane path node, refer to the step of establishing, by the control network element, the GTP-U tunnel path between the first user plane path node and the second user plane path node. The control network element may be replaced with the session management network element. Details are not described herein again.

It may be understood that, for any two user plane path nodes in the plurality of user plane path nodes, a GTP-U tunnel path may be established based on the foregoing step of establishing the GTP-U tunnel path between the first user plane path node and the second user plane path node, to establish a user plane path between the plurality of user plane path nodes.

It should be noted that a time sequence of the steps of establishing, by the control network element, the first GTP-U tunnel path between the first user plane path node and the second user plane path node is not limited in this embodiment of this application. Alternatively, the foregoing steps may be as follows: The control network element first sends, to the second user plane path node, the second request message for requesting to establish the first GTP-U tunnel path; after receiving the second response message carrying GTP-U tunnel path information allocated by the second user plane path node, the control network element sends, to the first user plane path node, the third request message carrying the GTP-U tunnel path information allocated by the second user plane path node; the control network element requests the first user plane path node to establish the first GTP-U tunnel path; and after receiving the third response message carrying GTP-U tunnel path information allocated by the first user plane path node, the control network element sends, to the second user plane path node, the GTP-U tunnel path information allocated by the first user plane path node, to complete establishment of the first GTP-U tunnel path.

In another possible implementation, the control network element may establish an SRv6 path between the first user plane path node and the second user plane path node. The SRv6 path between the first user plane path node and the second user plane path node is referred to as a first SRv6 path in the following, and a specific implementation of establishing the first SRv6 path by the control network element is described.

Optionally, in this implementation, the control network element may select the first user plane path node as a head node of the SRv6 path. For example, if a user plane path is established for a service function chain, the control network element may select a head node based on a sequence of service functions in the service function chain, that is, select a user plane path node corresponding to a 1^{st} service function as the head node.

When the control network element can directly exchange a message with the user plane path node, that the control network element establishes the first SRv6 path includes the following step:

The control network element sends a fifth request message to the first user plane function network element, where the fifth request message is used for requesting to establish the first SRv6 path.

The fifth request message includes address information of each user plane path node in the plurality of user plane path nodes other than the first user plane path node, for example, an IP address of the user plane path node. After receiving the fifth request message, the first user plane path node determines a corresponding user plane path node based on the address information of each user plane path node, and uses each determined user plane path node as each node included in the first SRv6 path, to establish the first SRv6 path, that is, to establish an SRv6 path between the plurality of user plane path nodes.

Further, after the first SRv6 path is established, in an SRv6 header of a data packet sent by the first user plane path node, an address of the first SRv6 path of each user plane in the first SRv6 path may be encapsulated based on a sequence of the first SRv6 path, to indicate a transmission path of the data packet.

For example, it is assumed that the control network element selects three user plane function network elements in S402, including a user plane function network element 1, a user plane function network element 2, and a user plane function network element 3. If the control network element selects the user plane function network element 1 as a head node, a fifth request message sent to the user plane function network element 1 includes IP addresses of the user plane function network element 2 and the user plane function network element 3.

When the control network element cannot directly exchange a message with the user plane path nodes, the control network element may send a fifth request message to the first user plane path node through the session management function network element, to establish the first SRv6 path.

Alternatively, in this implementation, the control network element may select a router supporting an SRv6 characteristic as a head node of the first SRv6 path, and send, to the router, a request message for requesting to establish the first SRv6 path. The request message may include address information of each user plane path node in the plurality of user plane path nodes. Correspondingly, after receiving the request message, the router determines a corresponding user plane path node based on the address information of each user plane path node, and uses each determined user plane path node as each node included in the first SRv6 path, to establish the first SRv6 path.

The foregoing describes a specific implementation of establishing the user plane path between the plurality of user plane path nodes by the control network element. In different scenarios, a first path node or a second path node may be different devices. The following provides descriptions with reference to different scenarios.

Scenario 1: All the plurality of user plane path nodes are user plane function network elements.

Optionally, the scenario 1 may be implemented based on the case 1 in S402.

In the scenario 1, the control network element may establish a GTP-U tunnel path or an SRv6 path between the plurality of user plane function network elements. For a specific implementation, refer to the foregoing description of establishing the first GTP-U tunnel path or the first SRv6 path. Details are not described herein again. The first user plane path node may be any user plane function network element in the plurality of user plane function network elements, and the second user plane path node may be any user plane function network element in the plurality of user plane function network elements that is different from the first user plane path node.

Scenario 2: All the plurality of user plane path nodes are access network devices.

Optionally, the scenario 2 may be implemented based on the case 2 in S402.

In the scenario 2, the control network element may establish a GTP-U tunnel path or an SRv6 path between the plurality of access network devices. For a specific implementation, refer to the foregoing description of establishing the first GTP-U tunnel path or the first SRv6 path. Details are not described herein again. The first user plane path node may be any access network device in the plurality of access network devices, and the second user plane path node may be any access network device in the plurality of access network devices that is different from the first user plane path node.

Scenario 3: The plurality of user plane path nodes include a plurality of access network devices and one user plane function network element, and the user plane function network element may be referred to as a target user plane function network element.

Optionally, the scenario 3 may be implemented based on the case 2 in S402.

In a possible implementation, the control network element may establish a GTP-U tunnel path between each of the plurality of access network devices and the target user plane function network element.

In this implementation, for a specific implementation of establishing, by the control network element, the GTP-U tunnel path between each of the plurality of access network devices and the target user plane function network element, refer to the foregoing description of establishing the first GTP-U tunnel path. Details are not described herein again. The first user plane path node may be any access network device in the plurality of access network devices, and the second user plane path node may be the target user plane function network element.

Further, in this implementation, the control network element may further establish a GTP-U tunnel path between the plurality of access network devices. For a specific implementation of establishing the GTP-U tunnel path between the plurality of access network devices by the control network element, refer to the foregoing description of establishing the first GTP-U tunnel path. Details are not described herein again. The first user plane path node may be any access network device in the plurality of access network devices, and the second user plane path node may be any access network device in the plurality of access network devices that is different from the first user plane path node.

In another possible implementation, the control network element may establish an SRv6 path between a plurality of access network devices and a target user plane function network element.

In this implementation, for a specific implementation of establishing, by the control network element, the SRv6 path between the plurality of access network devices and the target user plane function network element, refer to the foregoing description of establishing the first SRv6 path. Details are not described herein again. The first user plane path node may be any access network device in the plurality of access network devices, or may be the target user plane function network element.

Scenario 4: The plurality of user plane path nodes include a plurality of access network devices and a plurality of user plane function network elements. One user plane function network element may correspond to one or more access network devices.

Optionally, the scenario 4 may be implemented based on the case 2 in S402.

In a possible implementation, the control network element may establish a GTP-U tunnel path between each of the plurality of access network devices and a corresponding user plane function network element. In addition, the control network element may establish a GTP-U tunnel path between the plurality of user plane function network elements.

In this implementation, for a specific implementation of establishing, by the control network element, the GTP-U tunnel path between each of the plurality of access network devices and the corresponding user plane function network element, refer to the foregoing description of establishing the first GTP-U tunnel path. Details are not described herein again. The first user plane path node may be any access network device in the plurality of access network devices, and the second user plane path node may be a user plane function network element corresponding to the first user plane path node.

In this implementation, for a specific implementation of establishing the GTP-U tunnel path between the plurality of user plane function network elements by the control network element, refer to the foregoing description of establishing the first GTP-U tunnel path. Details are not described herein again. The first user plane path node may be any user plane function network element in the plurality of user plane function network elements, and the second user plane path node may be any user plane function network element in the plurality of user plane function network elements that is different from the first user plane function network element.

Further, in this implementation, the control network element may further establish a GTP-U tunnel path between the plurality of access network devices. For a specific implementation of establishing the GTP-U tunnel path between the plurality of access network devices by the control network element, refer to the foregoing description of establishing the first GTP-U tunnel path. Details are not described herein again. The first user plane path node may be any access network device in the plurality of access network devices, and the second user plane path node may be any access network device in the plurality of access network devices that is different from the first user plane path node.

In another possible implementation, the control network element may establish an SRv6 path between the plurality of access network devices and the plurality of user plane function network elements.

In this implementation, for a specific implementation of establishing, by the control network element, the SRv6 path between the plurality of access network devices and the plurality of user plane function network elements, refer to the foregoing description of establishing the first SRv6 path. Details are not described herein again. The first user plane path node may be any access network device in the plurality of access network devices, or may be any user plane function network element in the plurality of user plane function network elements.

According to the user plane path management method provided in this embodiment of this application, there is no limitation to an existing user plane path of terminal device-RAN-UPF-DN anymore, but a control network element is introduced. The control network element flexibly selects user plane path nodes, and establishes a user plane path between access network device s, between an access network device and a user plane function network element, or between user plane function network element s. This is applicable to a demand of a future new service for a user plane path.

It should be noted that in the foregoing description of S403, an example in which the control network element is a functional entity different from the session management network element is used for describing a specific implementation of establishing the user plane path by the control network element. It may be understood that, when the control network element is integrated into the session management network element, in the foregoing description of a specific implementation of establishing the user plane path by the control network element, the control network element may be correspondingly replaced with the session management network element, so that information exchanged between the control network element and the session management network element may be understood as information exchanged between the session management network elements.

For example, if the user plane path management method shown in FIG. 4 is applied to a 5G network, in the foregoing descriptions of S401 to S403, a network element or an entity corresponding to the access network device may be a RAN device in the 5G network, a network element or an entity corresponding to the user plane function network element may be a UPF in the 5G network, and a network element or an entity corresponding to the session management network element may be an SMF in the 5G network. For related function descriptions, refer to an existing standard. Details are not described herein.

Actions of the control network element in the foregoing steps S401 to S403 may be performed by the processor 301 in the communication apparatus 300 shown in FIG. 3 by invoking the application program code stored in the memory 303, to instruct the control network element to perform the actions. Actions of the user plane path nodes in steps S401 to S403 may be performed by the processor 301 in the communication apparatus 300 shown in FIG. 3 by invoking the application program code stored in the memory 303, to instruct the control network element to perform the actions.

The following describes two possible embodiments to which the user plane path management method shown in FIG. 4 is applicable by using an example in which the user plane path management method shown in FIG. 4 is applied to a 5G network and the control network element is a new network element different from an existing network element.

As shown in FIG. 5, a possible embodiment may include the following steps.

S501: A control network element receives a request message from an OAM network element, where the request message includes a plurality of pieces of service function information.

For the request message in S501, refer to the foregoing description of the first message corresponding to the first service function chain in S401. Details are not described herein again.

S502: The control network element selects a plurality of UPF network elements based on the plurality of pieces of service function information in the request message. In this embodiment, the control network element selects UPF network elements corresponding to a plurality of service functions: a UPF 1 and a UPF 2.

For details of S502, refer to the foregoing description of S402 in which the control network element determines the corresponding user plane function network element based on the service function information. Details are not described herein again.

S503: The control network element establishes a user plane path between the UPF 1 and the UPF 2.

In a possible implementation, as shown in solid-line steps between the control network element and the UPF 1, and between the control network element and the UPF 2 in FIG. 5, the control network element may directly send, to the UPF 1 and the UPF 2, a message for requesting to establish a user plane path, so as to establish the user plane path between the UPF 1 and the UPF 2.

In another possible implementation, as shown in a dashed-line step between the control network element and the SMF network element in FIG. 5, the control network element sends, to the SMF network element, a message for requesting to establish a user plane path, the request message carries information about the UPF 1 and the UPF 2, and the SMF network element establishes the user plane path between the UPF 1 and the UPF 2.

For details of S503, refer to the foregoing description of S403 in which the control network element establishes the user plane path between the plurality of user plane function network elements. Details are not described herein again.

Actions of the control network element in the foregoing steps S501 to S503 may be performed by the processor 301 in the communication apparatus 300 shown in FIG. 3 by invoking the application program code stored in the memory 303, to instruct the control network element to perform the actions. Actions of the user plane path nodes in steps S501 to S503 may be performed by the processor 301 in the communication apparatus 300 shown in FIG. 3 by invoking the application program code stored in the memory 303, to instruct the control network element to perform the actions.

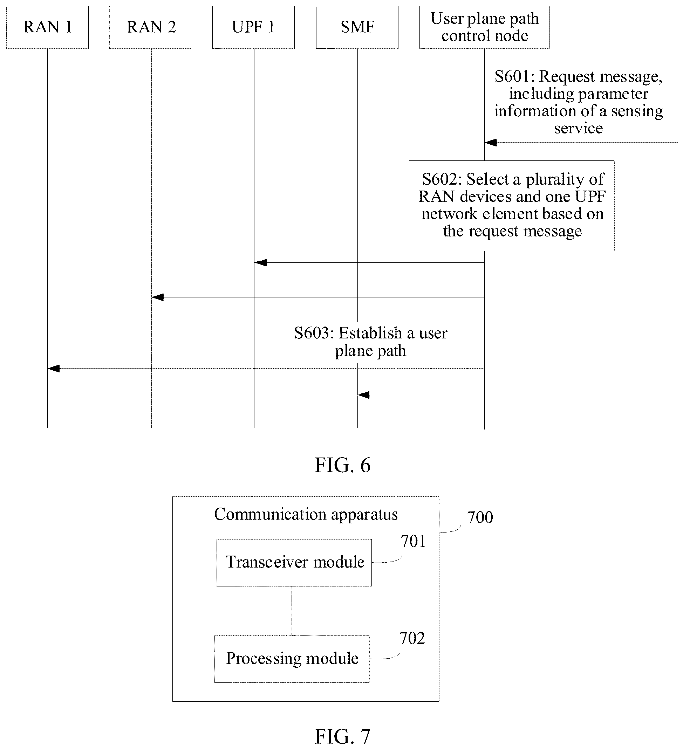

As shown in FIG. 6, another possible embodiment may include the following steps.

S601: A control network element receives a request message from an AF network element, where the request message includes parameter information of a sensing service, for example, location and/or sensing accuracy information corresponding to the sensing service.

For the request message in S601, refer to the foregoing description of the first message corresponding to the first sensing service in S401. Details are not described herein again.

S602: The control network element selects a plurality of RAN devices and one UPF network element based on the parameter information of the sensing service in the request message, for example, a RAN 1, a RAN 2, and a UPF 1, as shown in FIG. 6.

For details of S602, refer to the foregoing description of S402 in which the control network element selects the access network devices and the user plane function network element based on the parameter information of the first sensing service. Details are not described herein again.

S603: The control network element establishes a user plane path between the UPF 1 and each of the RAN 1 and the RAN 2.

In a possible implementation, as shown in solid-line steps between the control network element and the RAN 1, the RAN 2, and the UPF 1 in FIG. 6, the control network element may directly send, to the RAN 1, the RAN 2, and the UPF 1, a message for requesting to establish a user plane path, to establish the user plane path between the UPF 1 and each of the RAN 1 and the RAN 2.

In another possible implementation, as shown in a dashed-line step between the control network element and the SMF network element in FIG. 6, the control network element sends, to the SMF network element, a message for requesting to establish a user plane path, the request message carries information about the RAN 1, the RAN 2, and the UPF 1, and the SMF network element establishes the RAN 1, the RAN 2, and the UPF 1.

For details of S603, refer to the foregoing description of S403 in which the control network element establishes the user plane path between the plurality of access network devices and the target user plane function network element. Details are not described herein again.

Actions of the control network element in the foregoing steps S601 to S603 may be performed by the processor 301 in the communication apparatus 300 shown in FIG. 3 by invoking the application program code stored in the memory 303, to instruct the control network element to perform the actions. Actions of the user plane path nodes in steps S601 to S603 may be performed by the processor 301 in the communication apparatus 300 shown in FIG. 3 by invoking the application program code stored in the memory 303, to instruct the control network element to perform the actions.

It may be understood that, in the foregoing embodiments, the method and/or the steps implemented by the control network element may also be implemented by a component (for example, a chip or a circuit) that may be configured for the control network element, and the method and/or the steps implemented by the user plane path nodes may also be implemented by a component (for example, a chip or a circuit) that may be configured for the user plane path nodes.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the control network element in the foregoing method embodiments, or an apparatus including the foregoing control network element, or a component that can be configured for the control network element. Alternatively, the communication apparatus may be the user plane path node in the foregoing method embodiments, or an apparatus including the foregoing user plane path node, or a component that can be configured for the user plane path node.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In an actual implementation, another division manner may be used.

FIG. 7 is a diagram of a structure of a communication apparatus 700. The communication apparatus 700 includes a transceiver module 701 and a processing module 702. The transceiver module 701 may also be referred to as a transceiver unit, and is configured to implement receiving and sending functions. For example, the transceiver module 701 may be a transceiver circuit, a transceiver machine, a transceiver, or a communication interface.

For example, the communication apparatus 700 is the user plane path node in the foregoing method embodiments. The transceiver module 701 is configured to receive a first message, and the first message indicates to establish a user plane path. The processing module 702 is configured to determine a plurality of user plane path nodes based on the first message, and the user plane path node is a user plane function network element or an access network device. The processing module 702 is further configured to establish a user plane path between the plurality of user plane path nodes.

All related content of the steps in the foregoing method embodiments may be cited in function descriptions of the corresponding functional modules. Details are not described herein again.

In this embodiment, the communication apparatus 700 is presented in a form in which functional modules are obtained through division in an integrated manner. The "module" herein may be a specific ASIC, a circuit, a processor that executes one or more software or firmware programs, a memory, an integrated logic circuit, and/or another component capable of providing the foregoing functions. In a simple embodiment, a person skilled in the art may figure out that the communication apparatus 700 may be in the form of the communication apparatus 300 shown in FIG. 3.

For example, the processor 301 in the communication apparatus 300 shown in FIG. 3 may invoke the computer-executable instructions stored in the memory 303, to enable the communication apparatus 300 to perform the user plane path management method in the foregoing method embodiments.

Specifically, functions/implementation processes of the transceiver module 701 and the processing module 702 in FIG. 7 may be implemented by the processor 301 in the communication apparatus 300 shown in FIG. 3 by invoking the computer-executable instructions stored in the memory 303. Alternatively, a function/an implementation process of the processing module 702 in FIG. 7 may be implemented by the processor 301 in the communication apparatus 300 shown in FIG. 3 by invoking the computer-executable instructions stored in the memory 303, and a function/an implementation process of the transceiver module 701 in FIG. 7 may be implemented by using the communication interface 304 in the communication apparatus 300 shown in FIG. 3.

The communication apparatus 700 provided in this embodiment may perform the foregoing user plane path management method. Therefore, for technical effects that can be obtained by the communication apparatus 700, refer to the foregoing method embodiments. Details are not described herein again.

It may be understood that, one or more of the foregoing modules or units may be implemented by software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be built into a SoC (system on chip) or an ASIC, or may be an independent semiconductor chip. In addition to the core configured to perform calculation or processing by executing a software instruction, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface. The at least one processor is coupled to a memory via an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the appended claims, and are considered as any of or all modifications, variations, combinations or equivalents that cover the scope of this application. It is clearly that a person skilled in the art can make various modifications and variations to this application without departing from the scope of this application. This application is intended to cover these modifications and variations of this application provided that they fall within the scope of the claims in this application and their equivalent technologies.

## Claims

1. A user plane path management method, wherein the method comprises:
receiving, by a control network element, a first message, wherein the first message indicates to establish a user plane path;
determining, by the control network element, a plurality of user plane path nodes based on the first message, wherein the user plane path node is a user plane function network element or an access network device; and
establishing, by the control network element, a user plane path between the plurality of user plane path nodes.

2. The method according to claim 1, wherein the first message indicates to establish a user plane path corresponding to a first service function chain, and the first message comprises information indicating a plurality of service functions comprised in the first service function chain; and
determining, by the control network element, the plurality of user plane path nodes based on the first message comprises:
determining, by the control network element based on the first message, the plurality of user plane path nodes corresponding to the plurality of service functions comprised in the first service function chain.

3. The method according to claim 1, wherein the first message indicates to establish a user plane path corresponding to a first sensing service, and the first message comprises parameter information related to the first sensing service; and
determining, by the control network element, the plurality of user plane path nodes based on the first message comprises:
determining, by the control network element, the plurality of user plane path nodes based on the parameter information related to the first sensing service.

4. The method according to any one of claims 1 to 3, wherein the user plane path between the plurality of user plane path nodes is a general packet radio service tunneling protocol for the user plane GTP-U tunnel path or a segment routing over internet protocol version 6 IPv6 SRv6 path.

5. The method according to claim 4, wherein when the user plane path between the plurality of user plane path nodes is the GTP-U tunnel path, establishing, by the control network element, the user plane path between the plurality of user plane path nodes comprises:
sending, by the control network element, a second request message to a first user plane path node, wherein the second request message is used for requesting to establish a first GTP-U tunnel path, and the first user plane path node is any user plane path node in the plurality of user plane path nodes;
receiving, by the control network element, a second response message from the first user plane path node, wherein the second response message comprises GTP-U tunnel path information allocated by the first user plane path node to the first GTP-U tunnel path;
sending, by the control network element, a third request message to a second user plane path node, wherein the third request message is used for requesting to establish the first GTP-U tunnel path, the third request message comprises the GTP-U tunnel path information allocated by the first user plane path node to the first GTP-U tunnel path, and the second user plane path node is a user plane path node in the plurality of user plane path nodes that is different from the first user plane path node;
receiving, by the control network element, a third response message from the second user plane path node, wherein the third response message comprises GTP-U tunnel path information allocated by the second user plane path node to the first GTP-U tunnel path; and
sending, by the control network element to the first user plane path node, the GTP-U tunnel path information allocated by the second user plane path node to the first GTP-U tunnel path.

6. The method according to claim 4, wherein when the user plane path between the plurality of user plane path nodes is the GTP-U tunnel path, establishing, by the control network element, the user plane path between the plurality of user plane path nodes comprises:
sending, by the control network element, a fourth request message to a session management function network element, wherein the fourth request message is used for requesting to establish a first GTP-U tunnel path, the fourth request message comprises information about a first user plane path node and information about a second user plane path node, the information about the first user plane path node and the information about the second user plane path node are used by the session management function network element to establish the first GTP-U tunnel path between the first user plane path node and the second user plane path node, the first user plane path node is any user plane path node in the plurality of user plane path nodes, and the second user plane path node is a user plane path node in the plurality of user plane path nodes that is different from the first user plane path node.

7. The method according to claim 5 or 6, wherein each of the plurality of user plane path nodes is a user plane function network element, the first user plane path node is any user plane function network element in the plurality of user plane path nodes, and the second user plane path node is any user plane function network element in the plurality of user plane path nodes that is different from the first user plane path node;
each of the plurality of user plane path nodes is an access network device, wherein the first user plane path node is any access network device in the plurality of user plane path nodes, and the second user plane path node is any access network device in the plurality of user plane path nodes that is different from the first user plane path node;
the plurality of user plane path nodes comprise a plurality of access network devices and one target user plane function network element, wherein the first user plane path node is any access network device in the plurality of access network devices, and the second user plane path node is the target user plane function network element; or
the plurality of user plane path nodes comprise a plurality of access network devices and a plurality of user plane function network elements, wherein when the first user plane path node is any access network device in the plurality of access network devices, the second user plane path node is a user plane function network element in the plurality of user plane function network elements that corresponds to the first user plane path node; and when the first user plane path node is any user plane function network element in the plurality of user plane function network elements, the second user plane path node is any user plane function network element in the plurality of user plane function network elements that is different from the first user plane path node.

8. The method according to claim 4, wherein when the user plane path between the plurality of user plane path nodes is the SRv6 path, establishing, by the control network element, the user plane path between the plurality of user plane path nodes comprises:
sending, by the control network element, a fifth request message to a first user plane path node, wherein the fifth request message is used for requesting to establish a first SRv6 path, the first user plane path node is any user plane path node in the plurality of user plane path nodes, and the fifth request message comprises address information of each user plane path node in the plurality of user plane path nodes other than the first user plane path node.

9. The method according to claim 8, wherein sending, by the control network element, the fifth request message to the first user plane path node comprises:
sending, by the control network element, the fifth request message to the first user plane path node through a session management function network element.

10. The method according to claim 9, wherein each of the plurality of user plane path nodes is a user plane function network element, and the first user plane path node is any user plane function network element in the plurality of user plane path nodes.

11. A communication apparatus, wherein the apparatus comprises a transceiver module and a processing module, wherein
the transceiver module is configured to receive a first message, and the first message indicates to establish a user plane path;
the processing module is configured to determine a plurality of user plane path nodes based on the first message, and the user plane path node is a user plane function network element or an access network device; and
the processing module is further configured to establish a user plane path between the plurality of user plane path nodes.

12. The apparatus according to claim 11, wherein the first message indicates to establish a user plane path corresponding to a first service function chain, and the first message comprises information indicating a plurality of service functions comprised in the first service function chain; and
determining, by the processing module, the plurality of user plane path nodes based on the first message comprises:
determining, based on the first message, the plurality of user plane path nodes corresponding to the plurality of service functions comprised in the first service function chain.

13. The apparatus according to claim 11, wherein the first message indicates to establish a user plane path corresponding to a first sensing service, and the first message comprises parameter information related to the first sensing service; and
determining, by the processing module, the plurality of user plane path nodes based on the first message comprises:
determining the plurality of user plane path nodes based on the parameter information related to the first sensing service.

14. The apparatus according to any one of claims 11 to 13, wherein the user plane path between the plurality of user plane path nodes is a general packet radio service tunneling protocol for the user plane GTP-U tunnel path or a segment routing over internet protocol version 6 IPv6 SRv6 path.

15. The apparatus according to claim 14, wherein when the user plane path between the plurality of user plane path nodes is the GTP-U tunnel path, establishing, by the processing module, the user plane path between the plurality of user plane path nodes comprises:
sending, by the transceiver module, a second request message to a first user plane path node, wherein the second request message is used for requesting to establish a first GTP-U tunnel path, and the first user plane path node is any user plane path node in the plurality of user plane path nodes;
receiving, by the transceiver module, a second response message from the first user plane path node, wherein the second response message comprises GTP-U tunnel path information allocated by the first user plane path node to the first GTP-U tunnel path;
sending, by the transceiver module, a third request message to a second user plane path node, wherein the third request message is used for requesting to establish the first GTP-U tunnel path, the third request message comprises the GTP-U tunnel path information allocated by the first user plane path node to the first GTP-U tunnel path, and the second user plane path node is a user plane path node in the plurality of user plane path nodes that is different from the first user plane path node;
receiving, by the transceiver module, a third response message from the second user plane path node, wherein the third response message comprises GTP-U tunnel path information allocated by the second user plane path node to the first GTP-U tunnel path; and
sending, by the transceiver module to the first user plane path node, the GTP-U tunnel path information allocated by the second user plane path node to the first GTP-U tunnel path.

16. The apparatus according to claim 14, wherein when the user plane path between the plurality of user plane path nodes is the GTP-U tunnel path, establishing, by the processing module, the user plane path between the plurality of user plane path nodes comprises:
sending, by the transceiver module, a fourth request message to a session management function network element, wherein the fourth request message is used for requesting to establish a first GTP-U tunnel path, the fourth request message comprises information about a first user plane path node and information about a second user plane path node, the information about the first user plane path node and the information about the second user plane path node are used by the session management function network element to establish the first GTP-U tunnel path between the first user plane path node and the second user plane path node, the first user plane path node is any user plane path node in the plurality of user plane path nodes, and the second user plane path node is a user plane path node in the plurality of user plane path nodes that is different from the first user plane path node.

17. The apparatus according to claim 15 or 16, wherein each of the plurality of user plane path nodes is a user plane function network element, the first user plane path node is any user plane function network element in the plurality of user plane path nodes, and the second user plane path node is any user plane function network element in the plurality of user plane path nodes that is different from the first user plane path node;
each of the plurality of user plane path nodes is an access network device, wherein the first user plane path node is any access network device in the plurality of user plane path nodes, and the second user plane path node is any access network device in the plurality of user plane path nodes that is different from the first user plane path node;
the plurality of user plane path nodes comprise a plurality of access network devices and one target user plane function network element, wherein the first user plane path node is any access network device in the plurality of access network devices, and the second user plane path node is the target user plane function network element; or
the plurality of user plane path nodes comprise a plurality of access network devices and a plurality of user plane function network elements, wherein when the first control network element is any access network device in the plurality of access network devices, the second user plane path node is a user plane function network element in the plurality of user plane function network elements that corresponds to the first control network element; and when the first control network element is any user plane function network element in the plurality of user plane function network elements, the second user plane path node is any user plane function network element in the plurality of user plane function network elements that is different from the first control network element.

18. The apparatus according to claim 14, wherein when the user plane path between the plurality of user plane path nodes is the SRv6 path, establishing, by the processing module, the user plane path between the plurality of user plane path nodes comprises:
sending, by the transceiver module, a fifth request message to a first user plane path node, wherein the fifth request message is used for requesting to establish a first SRv6 path, the first user plane path node is any user plane path node in the plurality of user plane path nodes, and the fifth request message comprises address information of each user plane path node in the plurality of user plane path nodes other than the first user plane path node.

19. The apparatus according to claim 18, wherein sending, by the transceiver module, the fifth request message to the first user plane path node comprises:
sending the fifth request message to the first user plane path node through a session management function network element.

20. The apparatus according to claim 19, wherein each of the plurality of user plane path nodes is a user plane function network element, and the first user plane path node is any user plane function network element in the plurality of user plane path nodes.

21. A communication apparatus, wherein the communication apparatus comprises a processor, the processor is configured to execute instructions stored in a memory, and when the instructions are run by the processor, the communication apparatus is enabled to perform the method according to any one of claims 1 to 10.

22. The apparatus according to claim 21, wherein the communication apparatus further comprises the memory.

23. A computer-readable storage medium, wherein the computer-readable storage medium stores instructions, and when the instructions are executed by a computer, the method according to any one of claims 1 to 10 is performed.

24. A computer program product, wherein the computer program product comprises instructions, and when the instructions are executed by a computer, the method according to any one of claims 1 to 10 is performed.

25. A chip, wherein the chip comprises a processor, and the processor is configured to run instructions, to enable an apparatus comprising the chip to perform the method according to any one of claims 1 to 10.

26. The chip according to claim 25, wherein the chip further comprises a memory, and the memory is configured to store the instructions.

27. A communication system, wherein the communication system comprises a control network element and a user plane path node, and the control network element is configured to perform the method according to any one of claims 1 to 10.
